# EUROPEAN PATENT SPECIFICATION

(11) **EP 3 556 998 B1**
(45) Date of publication and mention of the grant of the patent: **09.12.2020**
(21) Application number: 19169351.4
(22) Date of filing: 15.04.2019
(51) Int. Cl.: F01D 5/14, F01D 11/12

(54) **AIR SEAL HAVING GASPATH PORTION WITH GEOMETRICALLY SEGMENTED COATING**
LUFTDICHTUNG MIT GASWEGABSCHNITT MIT GEOMETRISCH SEGMENTIERTER BESCHICHTUNG
JOINT D'AIR AYANT UNE PARTIE DE TRAJECTOIRE DE GAZ COMPORTANT UN REVÊTEMENT SEGMENTÉ GÉOMÉTRIQUEMENT

(30) Priority: 16.04.2018 US 201815953531
(43) Date of publication of application: 23.10.2019
(73) Proprietor: United Technologies Corporation, Farmington, CT 06032 (US)
(72) Inventor: ROMANOV, Dmitriy A., Wells, ME 04090-2848 (US)
(74) Representative: Dehns

(56) References cited:
- EP-A1- 2 325 347
- EP-A2- 2 275 645
- WO-A1-2014/133706
- DE-A1- 19 619 438

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. The fan section may also be driven by the low inner shaft. A direct drive gas turbine engine includes a fan section driven by the low spool such that the low pressure compressor, low pressure turbine and fan section rotate at a common speed in a common direction.

A prior art blade outer air seal, having the features of the preamble of claim 1, is disclosed in EP 2325347 A1. A further prior art blade outer air seal is disclosed in WO 2014/133706 A1.

### SUMMARY

A blade outer air seal for a gas turbine engine according to an aspect of the present invention is provided as set forth in claim 1.

In a further embodiment of any of the foregoing embodiments, the array of cells includes elongated grooves.

In a further embodiment of any of the foregoing embodiments, the array of cells includes parallel elongated grooves.

In a further embodiment of any of the foregoing embodiments, the array of cells includes sloped grooves.

In a further embodiment of any of the foregoing embodiments, the sloped grooves are circumferentially sloped.

In a further embodiment of any of the foregoing embodiments, the sloped grooves are sloped at an angle of 20° to 45°.

In a further embodiment of any of the foregoing embodiments, the array of cells includes grooves, and the grooves intersect.

In a further embodiment of any of the foregoing embodiments, the grooves intersect at non-perpendicular angles.

In a further embodiment of any of the foregoing embodiments, the array of cells includes cylindrical cells.

In a further embodiment of any of the foregoing embodiments, the array of cells includes polygonal cells.

In a further embodiment of any of the foregoing embodiments, the array of cells includes at least one of parallel elongated grooves, sloped grooves, intersecting grooves, cylindrical cells, or polygonal cells.

In a further embodiment of any of the foregoing embodiments, the geometrically segmented coating section is on the leading end of the seal arc-segment.

In a further embodiment of any of the foregoing embodiments, the geometrically segmented coating is on the first circumferential side of the seal arc-segment, and the second circumferential side excludes the geometrically segmented coating.

A gas turbine engine according to another aspect of the present invention is provided as set forth in claim 12.

In a further embodiment of any of the foregoing embodiments, the array of cells includes elongated grooves.

In a further embodiment of any of the foregoing embodiments, the array of cells includes sloped grooves.

In a further embodiment of any of the foregoing embodiments, the array of cells includes at least one of parallel elongated grooves, sloped grooves, intersecting grooves, cylindrical cells, or polygonal cells.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a gas turbine engine.
Figure 2 illustrates a section of the turbine section of the gas turbine engine of Figure 1.
Figures 3A and 3B illustrate, respectively, circumferential and axial views of a seal arc-segment of a blade outer air seal of the gas turbine engine.
Figure 3C illustrates a sectioned view of a geometrically segmented coating of the seal arc-segment of Figures 3A and 3B.
Figures 4A and 4B illustrate another example of a geometrically segmented coating that has parallel elongated grooves.
Figures 5A and 5B illustrate another example of a geometrically segmented coating of the seal arc-segment that has sloped grooves that intersect.
Figures 6A and 6B illustrate another example of a geometrically segmented coating of the seal arc-segment that has parallel sloped grooves.
Figures 7A and 7B illustrate another example of a geometrically segmented coating of the seal arc-segment that has sloped grooves and parallel grooves that intersect.
Figures 8A and 8B illustrate another example of a geometrically segmented coating of the seal arc-segment that has blind holes.
Figure 9 illustrates another example of a geometrically segmented coating of the seal arc-segment that has hexagonal cells.
Figure 10 illustrates another example of a geometrically segmented coating of the seal arc-segment that has rectangular cells.

### DETAILED DESCRIPTION

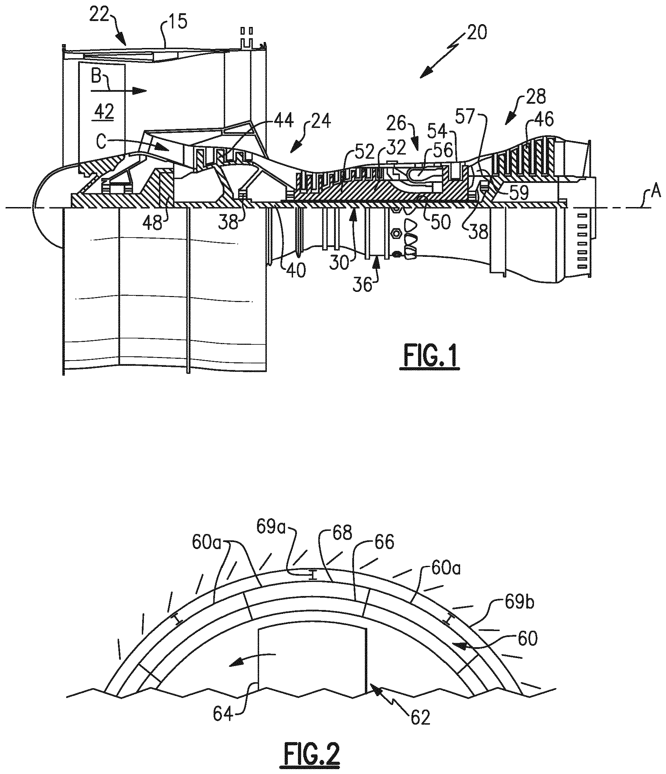

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (°R = K x ⁹/₅). The "Low corrected fan tip speed" as disclosed herein according to one non-limiting embodiment is less than about 1150 ft / second (350.5 meters/second).

Figure 2 illustrates a partial axial view through a portion of one of the stages of the turbine section 28. In this example, the turbine section 28 includes an annular blade outer air seal (BOAS) system or assembly 60 (hereafter BOAS 60) that is located radially outwards of a rotor 62 that has a row of rotor blades 64. As can be appreciated, the BOAS 60 can alternatively or additionally be adapted for other portions of the engine 20, such as the compressor section 24. The BOAS 60 includes a plurality of segments 60a that are circumferentially arranged in an annulus around the central axis A of the engine 20. Each of the segments 60a generally includes a seal arc-segment 66 that is mounted in a carriage 68. Each carriage 68 is mounted through one or more connections 69a to a case structure 69b. Alternatively, the seal arc-segment 66 may be mounted directly to the case structure 69b. The seal arc-segment 66 is in close radial proximity to the tips of the blades 64, to reduce the amount of gas flow that escapes around the blades 64.

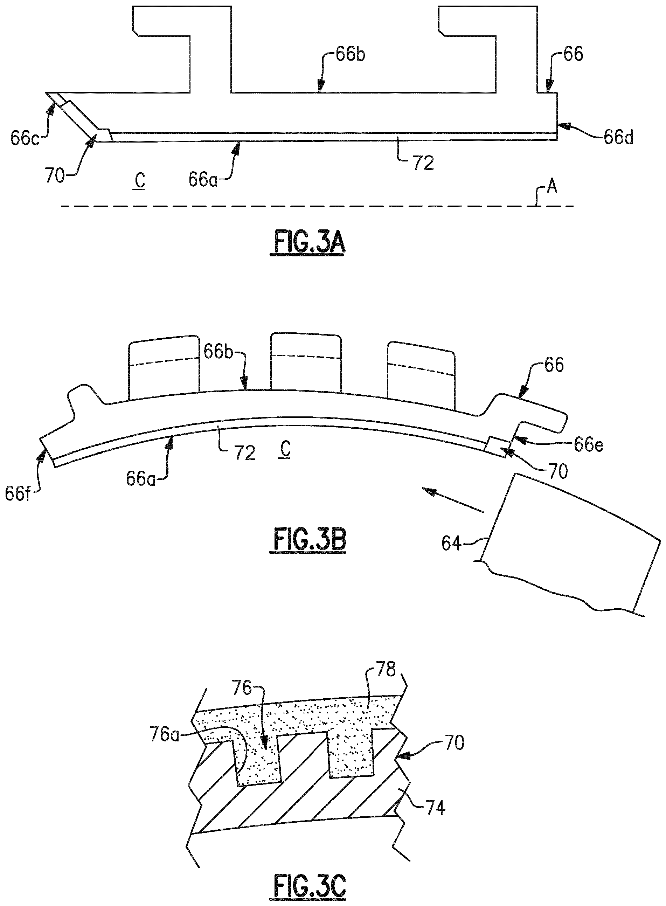

Figure 3A illustrates a representative one of the seal arc-segments 66 from a circumferential direction, and Figure 3B illustrates the seal arc-segment 66 from an axial direction. The seal arc-segment 66 defines a gaspath side 66a, a non-gaspath side 66b, leading and trailing ends 66c/66d, and first and second circumferential sides 66e/66f. The gaspath side 66a is the side or surface of the seal arc-segment 66 that faces, and is directly exposed to, the core airflow path C, which is generally the radially inner side or surface of the seal arc-segment 66. The non-gaspath side 66b is the side or surface that faces away from, and is not directly exposed to, the core airflow path C, which is generally the radially outer side or surface of the seal arc-segment 66. The leading end 66c is the forward end of the seal arc-segment 66 that first receives the airflow in the core airflow path C, and the trailing end 66d is the aft end of the seal arc-segment 66 that is last exposed to the airflow in the core airflow path C before the airflow moves downstream.

Blade outer air seals in general may include barrier coatings (e.g., thermal or environmental barrier coatings) on the gaspath side that serve to protect the underlying structure, typically formed of an alloy. A problem can be that the barrier coating spalls, leaving the underlying alloy exposed. In this regard, a portion of the gaspath side 66a of the disclosed seal arc-segment 66 has a geometrically segmented coating section 70 ("GSC section 70"). In particular, the seal arc-segment 66 includes the GSC section 70 in only one or more selected regions which are especially susceptible to spallation.

Two regions on blade outer air seals that are more susceptible to spallation than other regions are the leading end and the circumferential side that the blade 64, when rotating, first encounters, which may be known as the blade arrival side. In this regard, the seal arc-segment 66 includes GSC sections 70 on both the leading end 66c, on the first circumferential side 66e (the blade arrival side).

According to the invention and as illustrated, the seal arc-segment 66 has GSC sections 70 on both the leading end 66a and the first circumferential side 66e. The GSC sections 70 provide enhanced protection in those areas, thus facilitating improved spallation durability of the seal arc-segment 66.

The remainder of the gas path side 66a has a barrier coating 72 such as a ceramic coating. A ceramic material is a compound of metallic or metalloid elements bonded with nonmetallic elements or metalloid elements primarily in ionic or covalent bonds. Example ceramic materials may include, but are not limited to, oxides, carbides, nitrides, borides, silicides, and combinations thereof. Additional, example barrier coatings 72 may include, but are not limited to, ceramic coating systems, such as yttria stabilized with zirconia, hafnia, and/or gadolinia, gadolinia zirconate, molybdate, alumina, or combinations thereof, with or without underlying MCrAlY bond coats, where the M includes at least one of nickel, cobalt, iron, or combinations thereof.

Figure 3C illustrates a sectioned view through a representative portion of the GSC section 70. The GSC section 70 includes a wall 74. The wall 74 includes an array of cells 76 defined by cell sidewalls 76a. The array is a repeating geometric pattern of one or more cell geometries. A coating 78 is disposed in the array of cells 76. The cells 76 mechanically facilitate bonding of the coating 78 on the wall 74. The coating 78 is a barrier coating, such as a ceramic coating. The coating 78 most typically will be the same composition as the barrier coating 72 that is on the remainder of the gaspath side 66a of the seal arc-segment 66, but may alternatively be a different one of the example compositions discussed above for the coating 70.

The wall 74 may be formed of an alloy. Example alloys may include, but are not limited to, nickel alloys, cobalt alloys, a nickel alloy coated with cobalt or cobalt alloy, or non-nickel alloys that do not substantially react with ceramic.

The cells 76 facilitate reducing internal stresses in the coating 78 that may occur from sintering at relatively high surface temperatures during use in the engine 20. The sintering may result in partial melting, densification, and diffusional shrinkage of the coating 78 and thereby induce internal stresses. The cells 76 serve to produce faults in the coating 78. A fault is a crack or localized line or region in the coating 78 that is weaker than the surrounding regions. As an example, the faults may be regions where the coating 78 has localized lower density, i.e., higher porosity, than the surrounding regions, resulting in an inherent weakness at which the coating 78 can preferentially crack to release energy associated with the internal stresses (e.g., reducing shear and radial stresses). That is, the energy associated with the internal stresses may be dissipated in the faults such that there is less energy available for causing delamination cracking between the coating 78 and the underlying wall 74. As an example, the faults may emanate from the relatively sharp corners of the cells 76.

The GSC section 70 may be formed using several different fabrication techniques. As an example, the wall 74 may be fabricated by investment casting, additive manufacturing, brazing, or combinations thereof, but is not limited to such techniques. For instance, the cells 76 can be separately fabricated and brazed to the remaining portion of the wall 74, which can be investment cast or additively fabricated. Alternatively, the cells 76 can be formed by other techniques, such as depositing an alloy coating and removing sections of the alloy coating by machining, electro-discharge machining (EDM), or other removal process.

To produce the coating 78, ceramic coating material is deposited over the cells 76. The deposition process can include, but is not limited to, plasma spray or physical vapor deposition. There may be voids or pores in the coating 78; however, the coating 78 may be substantially fully dense. For instance, the coating 78 may have a porosity of less than 15%.

The ceramic coating material fills or substantially fills the cells 76 and is deposited in a thickness that is greater than the height of the cells 76. At this stage, the surface of the coating 78 may have contours from the underlying cells 76. If such contours are undesired, the surface may be machined, ground, or abraded flat. For instance, the surface is reduced down to or close to the tops of the cells 76.

The cells 76 may be provided in a variety of different patterns. The figures that follow illustrate examples of such patterns. The examples are numbered with like reference numerals to designate like elements where appropriate, and reference numerals with the addition of one-hundred or multiples thereof designate modified elements that are understood to incorporate the same features and benefits of the corresponding elements.

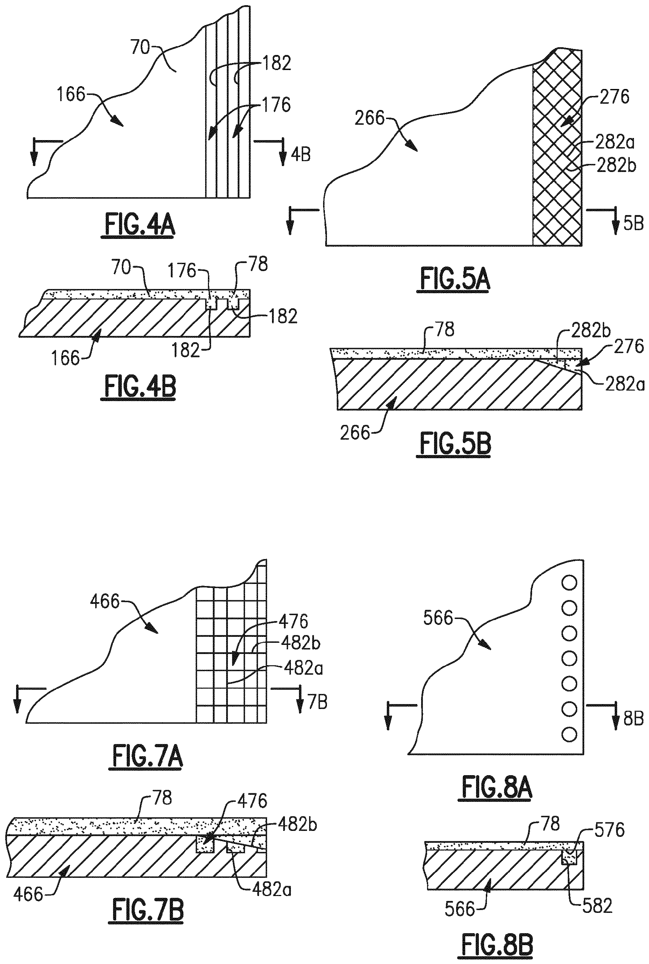

Figures 4A and 4B illustrate a seal arc-segment 166. In this example, the cells 176 are provided by parallel elongated grooves 182. "Elongated" refers to the grooves 182 being longer than they are wide and deep. The grooves 182 here are generally rectangular. As shown in Figure 4B, the coating 78 fills or substantially fills the grooves 182.

Figures 5A and 5B illustrate a seal arc-segment 266. In this example, the cells 276 are provided by sloped elongated grooves 282a/282b that cross or intersect. As shown in Figure 5B, the coating 78 fills or substantially fills the grooves 282a/282b. The sloped grooves 282a/282b cross at non-perpendicular angles. The grooves 282a/282b slope toward the edge of the seal arc segment 266. Put another way, the grooves 282a/282b become shallower moving inwards from the edge such that they are deepest at the edge. The angle of the slope may be varied, but angles that are too steep or too shallow may be ineffective or less effective for producing the faults in the coating 78. Most typically, the slope angle will be 20° to 45° (taken with respect to a line perpendicular to the edge face).

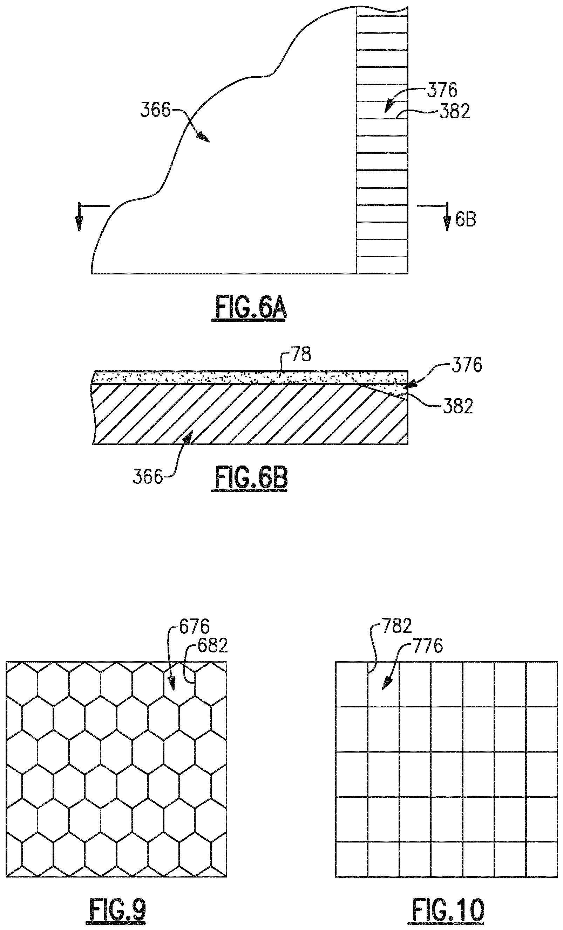

Figures 6A and 6B illustrate a seal arc-segment 366. In this example, the cells 376 are provided by parallel circumferentially sloped elongated grooves 382. As shown in Figure 6B, the coating 78 fills or substantially fills the grooves 382. Similar to the grooves 282a/282b, the grooves 382 slope toward the edge of the seal arc segment 366 and may have a slope angle of 20° to 45° (taken with respect to a line perpendicular to the edge face).

Figures 7A and 7B illustrate a seal arc-segment 466. In this example, the cells 476 are provided by parallel elongated grooves 482a, like the grooves 182, and sloped grooves 482b, like the grooves 382. As shown in Figure 7B, the coating 78 fills or substantially fills the grooves 482a/482b.

Figures 8A and 8B illustrate another seal arc segment 566. In this example, rather than a groove, the cells 576 are provided by blind holes 582. In this case, the blind holes 582 are cylindrical cells. In modified examples, the cylindrical cells 576 may have other geometries, such as, but not limited to, polygonal geometries. Figures 9 and 10 show two such examples. In Figure 9, the cells 676 are provided by hexagonal holes or cells 682, which form a honeycomb pattern. In Figure 10, the cells 776 are provided by rectangular holes or cells 782, which form a screen pattern. As will be appreciated, when more than one GSC section 70 is employed on a seal arc segment, such as on the leading end 66c or on the first circumferential side 66e as in the seal arc-segment 66 above, the GSC sections 70 may have the same type of array of cells. For instance, both GSC sections 70 may have the elongated parallel grooves 182. Alternatively, the two GSC sections 70 may have different types of arrays of cells. For instance, one of the GSC sections may have the sloped crossing grooves 282a/282b and the other GSC section 70 may have the blind holes 582.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A blade outer air seal (60) for a gas turbine engine (20), comprising:
a seal arc-segment (66;166;266;366;466;566) defining a gaspath side (66a), a non-gaspath side (66b), leading and trailing ends (66c,66d), and first and second circumferential sides (66e,66f), a portion of the gaspath side (66a) having a geometrically segmented coating section (70) on the leading end (66c) of the seal arc-segment (66;166;266;366;466;566) and the first circumferential side (66e) of the seal arc-segment (66;166;266;366;466;566), the geometrically segmented coating section (70) including:
a wall (74) including an array of cells (76;176;276;376;476;576;676;776); and
a coating (78) disposed in the array of cells (76...776),
**characterized in that**:
a remaining portion of the gaspath side (66a) includes a non-segmented coating (72).

2. The blade outer air seal as recited in claim 1, wherein the array of cells includes elongated grooves (182;282a;282b;382;482a,482b;582).

3. The blade outer air seal as recited in claim 1, wherein the array of cells includes parallel elongated grooves (182).

4. The blade outer air seal as recited in claim 1, wherein the array of cells includes sloped grooves (282a,282b;382;482a,482b).

5. The blade outer air seal as recited in claim 4, wherein the sloped grooves (282a,282b;382;482a,482b) are circumferentially sloped (382).

6. The blade outer air seal as recited in claim 4 or 5, wherein the sloped grooves (282a,282b;382;482a,482b) are sloped at an angle of 20° to 45°.

7. The blade outer air seal as recited in claim 1, wherein the array of cells includes grooves (282a,282b;482a,482b), and the grooves intersect.

8. The blade outer air seal as recited in claim 7, wherein the grooves (282a,282b) intersect at non-perpendicular angles.

9. The blade outer air seal as recited in claim 1, wherein the array of cells includes polygonal cells (682;782).

10. The blade outer air seal as recited in claim 1, wherein the array of cells includes at least one of parallel elongated grooves (182), sloped grooves (282a,282b;382;482a,482b), intersecting grooves (282a,282b;482a,482b), cylindrical cells (582), or polygonal cells (682;782).

11. The blade outer air seal as recited in claim 1, wherein the second circumferential side (66f) excludes the geometrically segmented coating section (70).

12. A gas turbine engine (20) comprising:
a compressor section (24);
a combustor (56) in fluid communication with the compressor section (24); and
a turbine section (28) in fluid communication with the combustor (56),
the turbine section (28) having the blade outer air seal of any preceding claim.

13. The blade outer air seal as recited in claim 10, wherein the array of cells further includes an additional, different one of parallel elongated grooves (182), sloped grooves (282a,282b;382;482a,482b), intersecting grooves (282a,282b;482a,482b), cylindrical cells (582), or polygonal cells (682;782).

14. The blade outer air seal as recited in claim 1, wherein the array of cells includes at least one of polygonal cells (682;782) and grooves (282a,282b) intersecting at non-perpendicular angles.

15. The blade outer air seal as recited in claim 1, wherein the non-segmented coating (72) includes yttria stabilized with zirconia, hafnia, and/or gadolinia, gadolinia zirconate, molybdate, alumina, or combinations thereof.

## Patentansprüche

1. Laufschaufelspitzendichtung (60) für ein Gasturbinentriebwerk (20), umfassend:
ein Dichtungsbogensegment (66; 166; 266; 366; 466; 566), das eine Gaswegseite (66a), eine Nicht-Gaswegseite (66b), ein vorderes und ein hinteres Ende (66c, 66d) und eine erste und eine zweite Umfangsseite (66e, 66f) definiert, wobei ein Abschnitt der Gaswegseite (66a) einen geometrisch segmentierten Beschichtungsabschnitt (70) an dem vorderen Ende (66c) des Dichtungsbogensegments (66; 166; 266; 366; 466; 566) und der ersten Umfangsseite (66e) des Dichtungsbogensegments (66; 166; 266; 366; 466; 566) aufweist, wobei der geometrisch segmentierte Beschichtungsabschnitt (70) Folgendes beinhaltet:
eine Wand (74) mit einer Anordnung von Zellen (76; 176; 276; 376; 476; 576; 676; 776);
und
eine Beschichtung (78), die in der Anordnung von Zellen (76...776) angeordnet ist,
**dadurch gekennzeichnet, dass**:
ein verbleibender Abschnitt der Gaswegseite (66a) eine nichtsegmentierte Beschichtung (72) beinhaltet.

2. Laufschaufelspitzendichtung nach Anspruch 1, wobei die Anordnung von Zellen gestreckte Rillen (182; 282a; 282b; 382; 482a, 482b; 582) beinhaltet.

3. Laufschaufelspitzendichtung nach Anspruch 1, wobei die Anordnung von Zellen parallele gestreckte Rillen (182) beinhaltet.

4. Laufschaufelspitzendichtung nach Anspruch 1, wobei die Anordnung von Zellen geneigte Rillen (282a, 282b; 382; 482a, 482b) beinhaltet.

5. Laufschaufelspitzendichtung nach Anspruch 4, wobei die geneigten Rillen (282a, 282b; 382; 482a, 482b) umlaufend geneigt sind (382).

6. Laufschaufelspitzendichtung nach Anspruch 4 oder 5, wobei die geneigten Rillen (282a, 282b; 382; 482a, 482b) in einem Winkel von 20° bis 45° geneigt sind.

7. Laufschaufelspitzendichtung nach Anspruch 1, wobei die Anordnung von Zellen Rillen (282a, 282b; 482a, 482b) beinhaltet und die Rillen sich schneiden.

8. Laufschaufelspitzendichtung nach Anspruch 7, wobei die Rillen (282a, 282b) sich in nichtrechtwinkligen Winkeln schneiden.

9. Laufschaufelspitzendichtung nach Anspruch 1, wobei die Anordnung von Zellen polygonale Zellen (682; 782) beinhaltet.

10. Laufschaufelspitzendichtung nach Anspruch 1, wobei die Anordnung von Zellen mindestens eines von parallelen gestreckten Rillen (182), geneigten Rillen (282a, 282b; 382; 482a, 482b), sich schneidenden Rillen (282a, 282b; 482a, 482b), zylindrischen Zellen (582) oder polygonalen Zellen (682; 782) beinhaltet.

11. Laufschaufelspitzendichtung nach Anspruch 1, wobei die zweite Umfangsseite (66f) den geometrisch segmentierten Beschichtungsabschnitt (70) ausschließt.

12. Gasturbinentriebwerk (20), umfassend:
einen Verdichterabschnitt (24),
eine Brennkammer (56), die in Fluidkommunikation mit dem Verdichterabschnitt (24) steht,
und
einen Turbinenabschnitt (28), der in Fluidkommunikation mit der Brennkammer (56) steht,
wobei der Turbinenabschnitt (28) die Laufschaufelspitzendichtung nach einem der vorstehenden Ansprüche aufweist.

13. Laufschaufelspitzendichtung nach Anspruch 10, wobei die Anordnung von Zellen ferner ein zusätzliches, unterschiedliches eines von parallelen gestreckten Rillen (182), geneigten Rillen (282a, 282b; 382; 482a, 482b), sich schneidenden Rillen (282a, 282b; 482a, 482b), zylindrischen Zellen (582) oder polygonalen Zellen (682; 782) beinhaltet.

14. Laufschaufelspitzendichtung nach Anspruch 1, wobei die Anordnung von Zellen mindestens eines von polygonalen Zellen (682; 782) und Rillen (282a, 282b) beinhaltet, die sich in nichtrechtwinkligen Winkeln schneiden.

15. Laufschaufelspitzendichtung nach Anspruch 1, wobei die nichtsegmentierte Beschichtung (72) Yttriumoxid beinhaltet, das mit Zirkonoxid, Hafniumoxid und/oder Gadoliniumoxid, Gadoliniumoxidzirkonat, Molybdat, Aluminiumoxid oder Kombinationen davon stabilisiert ist.

## Revendications

1. Joint d'air extérieur de pale (60) pour un moteur à turbine à gaz (20), comprenant :
un segment d'arc de joint (66 ; 166 ; 266 ; 366 ; 466 ; 566) définissant un côté de trajectoire de gaz (66a), un côté sans trajectoire de gaz (66b), des extrémités avant et arrière (66c, 66d), et des premier et second côtés circonférentiels (66e, 66f), une partie du côté de trajectoire de gaz (66a) ayant une section de revêtement segmentée géométriquement (70) sur l'extrémité avant (66c) du segment d'arc de joint (66 ; 166 ; 266 ; 366 ; 466 ; 566) et le premier côté circonférentiel (66e) du segment d'arc de joint (66 ; 166 ; 266 ; 366 ; 466 ; 566), la section de revêtement segmentée géométriquement (70) comportant :
une paroi (74) comportant un réseau de cellules (76 ; 176 ; 276 ; 376 ; 476 ; 576 ; 676 ; 776) ; et
un revêtement (78) disposé dans le réseau de cellules (76...776), **caractérisé en ce que** :
une partie restante du côté de trajectoire de gaz (66a) comporte un revêtement non segmenté (72).

2. Joint d'air extérieur de pale selon la revendication 1, dans lequel le réseau de cellules comporte des rainures allongées (182 ; 282a ; 282b ; 382 ; 482a, 482b ; 582).

3. Joint d'air extérieur de pale selon la revendication 1, dans lequel le réseau de cellules comporte des rainures allongées parallèles (182).

4. Joint d'air extérieur de pale selon la revendication 1, dans lequel le réseau de cellules comporte des rainures inclinées (282a, 282b ; 382 ; 482a, 482b).

5. Joint d'air extérieur de pale selon la revendication 4, dans lequel les rainures inclinées (282a, 282b ; 382 ; 482a, 482b) sont inclinées circonférentiellement (382).

6. Joint d'air extérieur de pale selon la revendication 4 ou 5, dans lequel les rainures inclinées (282a, 282b ; 382 ; 482a, 482b) sont inclinées selon un angle de 20° à 45°.

7. Joint d'air extérieur de pale selon la revendication 1, dans lequel le réseau de cellules comporte des rainures (282a, 282b ; 482a, 482b), et les rainures se coupent.

8. Joint d'air extérieur de pale selon la revendication 7, dans lequel les rainures (282a, 282b) se coupent à des angles non perpendiculaires.

9. Joint d'air extérieur de pale selon la revendication 1, dans lequel le réseau de cellules comporte des cellules polygonales (682 ; 782).

10. Joint d'air extérieur de pale selon la revendication 1, dans lequel le réseau de cellules comporte au moins l'une parmi les rainures allongées parallèles (182), les rainures inclinées (282a, 282b ; 382 ; 482a, 482b), les rainures se coupant (282a, 282b; 482a, 482b), les cellules cylindriques (582) ou les cellules polygonales (682 ; 782).

11. Joint d'air extérieur de pale selon la revendication 1, dans lequel le second côté circonférentiel (66f) exclut la section de revêtement segmentée géométriquement (70).

12. Moteur à turbine à gaz (20) comprenant :
une section de compresseur (24) ;
une chambre de combustion (56) en communication fluidique avec la section de compresseur (24) ; et
une section de turbine (28) en communication fluidique avec la chambre de combustion (56),
la section de turbine (28) ayant le joint d'air extérieur de pale selon une quelconque revendication précédente.

13. Joint d'air extérieur de pale selon la revendication 10, dans lequel le réseau de cellules comporte en outre une autre, différente, parmi les rainures allongées parallèles (182), les rainures inclinées (282a, 282b ; 382 ; 482a, 482b), les rainures se coupant (282a, 282b ; 482a, 482b), les cellules cylindriques (582) ou les cellules polygonales (682 ; 782).

14. Joint d'air extérieur de pale selon la revendication 1, dans lequel le réseau de cellules comporte au moins l'une des cellules polygonales (682 ; 782) et des rainures (282a, 282b) se coupant à des angles non perpendiculaires.

15. Joint d'air extérieur de pale selon la revendication 1, dans lequel le revêtement non segmenté (72) comporte de l'yttria stabilisé avec de la zircone, de l'oxyde d'hafnium et/ou de l'oxyde de gadolinium, du zirconate de gadolinium, du molybdate, de l'alumine ou des combinaisons de ceux-ci.
